# EUROPEAN PATENT APPLICATION

(11) **EP 0 894 826 A1**
(43) Date of publication of application: **03.02.1999**
(21) Application number: 98202534.8
(22) Date of filing: 28.07.1998
(51) Int. Cl.: C08L 21/00, C08L 23/16, C08L 83/04

(54) **Components of low frictional rubber and the method of the production**

(30) Priority: 29.07.1997 JP 203526/97
(71) Applicant: Mita Company, Ltd., Kamakura-shi, Kanagawa (JP); Kouyaku Company, Ltd., Akashi-shi, Hyogo (JP)
(72) Inventor: Zukoshi, Tomohito, Kamakura-shi, Kanagawa (JP); Kawano, Nagayasu, Kurume-shi, Hukuoka (JP)
(74) Representative: Van kan, Johan Joseph Hubert, Ir.

(57) **Abstract**

**Subject**

The present invention is to offer the constituent of rubber without the surface treatment and the generation of any creaking noise or vibration noise when it slides on the glass surface.

**Means for the Solution**

the constituents of a low frictional rubber characterized by that silicone denatured acryl copolymers and polymers containing tetrafluorethylene (PTFE) are mixed with natural rubber, synthetic rubber or their mixture( component rubber)

## Description

### Background of the Invention

### Field of the Invention

The present invention mainly relates to the constituent of rubber with a low coefficient of friction and the production method. Further details, the present invention relates to the constituent of rubber that is widely used as a wiper blade, a bearing element, oil seal and a valve element and that can work with low friction when the rubber was scrubbed or pressed, which results in the work without any trouble when it was scrubbed or pressed, and relates to the method of the production.

### Description of the Prior Art

Usually, a natural rubber, a synthetic rubber or an elastic body made of the mixture of the both was used for a wiper blade for a windshield glass. The materials used so far showed a high coefficient of friction. Therefore, a creaking noise and so forth were generated between the glass surface and the wiper blade, when the wiper blade wiped up water or was turned at the extremely right or left side. These affairs gave a driver an unpleasant feeling or caused the obstruction of visibility because of irregular wiping.

In order to solve the problems, it was carried out that the surface of the blade rubber touching on the glass was treated by a halogen compound like chlorine or that the property of the blade rubber was improved by the adhesion of molybdenum disulfide, polymers containing tetrafluorethylene or low frictional powder.

However, the haloid treatment of the blade rubber composed of natural rubber surface or diene group rubber of SBR caused the increment of the manufacturing steps and the cost for the treatment of wasted water. Further, the said treatment produces an irregular quality on the surface of the blade rubber, because of the difficulty of the quality control. A blade rubber with the low level treatment does not show an enough improvement, because of its high coefficient of friction. On the other hand, a blade rubber with the high level treatment may be broken on use, because of the deep crack on the surface. Besides, a haloid layer is removed by ultraviolet to result in the lost of the low frictional property. It also has the problem that it may be fixed with the surface of a windshield glass because of the reaction of it with silicon, a component of glass.

A blade rubber adhering a low frictional powder like polymers containing tetrachloroethylene has the short durability of the low frictional property, because the adhered layer is extremely thin. In addition, the production of said blade rubber causes increment of increase the cost because of the increase of the manufacturing steps and the use of expensive materials.

On the other hand, a silicone rubber cannot be treated by a halogen compound or a low frictional powder, because of the physical and chemical properties of the rubber. Therefore, the blade rubber made of silicone rubber is used without the solution of a creaking noise and a vibrating noise.

### Object of the Invention

On the in consideration of consideration of such problems of conventional techniques, the purpose of the present invention is to offer a constituent of a low frictional rubber with a long stability. In other words, the purpose of the present invention is to offer the rubber with a remarkably low coefficient of friction, which not only a creaking noise or a vibrating noise is not generated when it is used as a wiper blade, but the production of said constituent is easy, because it does not need its surface treatment, different from the conventional method of production in which the surface treatment is carried out.

### Means of settlement for the Object

The present invention is related to the following constituents of low frictional rubber and the production method.
(1) the constituents of a low frictional rubber characterized by that silicone denatured acryl copolymers are mixed with polymers containing tetrafluorethylene (PTFE) in natural rubber, synthetic rubber or their mixture( component rubber).
(2) the constituents of a low frictional rubber described in said (1) and characterized by that 1 ∼ 10 kg (PHR) of silicone denatured acryl copolymers is mixed in 100 kg of said component rubber.
(3) the constituents of a low frictional rubber described in said (1) or (2) and characterized by that 0.5 ∼ 3 kg (PHR) of polymers containing tetrafluorethylene is mixed in said component rubber.
(4) the production method of the constituents of a low frictional rubber characterized by that silicone denatured acryl copolymers are mixed with polymers containing tetrafluorethylene in the component rubber to result in uniformly dispersing silicone denatured acryl copolymers and that sulfur is added in said mixture at last.

### Brief Description of Drawing

Fig. 1 is a figure showing the measurement method of the coefficient of friction;
Fig. 2 is a figure showing the coefficient of friction of sample No. 1 for a sprinkling condition;
Fig. 3 is a figure showing the coefficient of friction of sample No. 2 for a sprinkling condition;
Fig. 4 is a figure showing the coefficient of friction of sample No. 3 for a sprinkling condition;
Fig. 5 is a figure showing the coefficient of friction of sample No. 4 for a sprinkling condition;
Fig. 6 is a figure showing the coefficient of friction of sample No. 5 for a sprinkling condition;
Fig. 7 is a figure showing the coefficient of friction of sample No. 6 for a sprinkling condition;
Fig. 8 is a figure showing the coefficient of friction of sample No. 7 for a sprinkling condition;
Fig. 9 is a figure showing the coefficient of friction of sample No. 1 for a drying condition;
Fig. 10 is a figure showing the coefficient of friction of sample No. 2 for a drying condition;
Fig. 11 is a figure showing the coefficient of friction of sample No. 3 for a drying condition;
Fig. 12 is a figure showing the coefficient of friction of sample No. 4 for a drying condition;
Fig. 13 is a figure showing the coefficient of friction of sample No. 5 for a drying condition;
Fig. 14 is a figure showing the coefficient of friction of sample No. 6 for a drying condition;
Fig. 15 is a figure showing the coefficient of friction of sample No. 7 for a drying condition;

### Best mode of the Invention

Some working examples on the present invention are described below in detail.

### (I) The constituent of rubber

The constituent of rubber in the present invention is mainly composed of natural rubber, synthetic rubber or their mixture (in the present invention, natural rubber, synthetic rubber and their mixture are totally called component rubbers). The kind of component rubbers are not limited. For example, as a synthetic rubber, the following rubber can be widely used; a generally used rubber like ethylene-propylene contained polymers (EPM), ethylene-propylene-diene contained polymers (EPDM), nitrile rubber (NBR), styrene-butadiene rubber (SBR), isoprene rubber (IR), butadiene rubber (BR), chloroprene (CR), butyl rubber (IIR) or urethane rubber, or a specially used rubber like silicone rubber, fluorine-contained rubber, acryl rubber or ethylene-diacryl rubber. Among them, ethylene-propylene contained polymers (EPM), ethylene-propylene-diene contained polymers (EPDM), nitrile rubber (NBR), styrene-butadiene rubber (SBR), urethane rubber and silicone rubber are remarkably useful and widely used for the wireblades, various kinds of bearing members and/or oilseals . Component rubbers treated by oil breeding can be also used.

The constituent of rubber in the present invention is characterized by that it is greatly decreased its coefficient of friction by mixing silicone denatured acryl copolymers and polymers containing tetrafluorethylene with said component rubber. The denaturation level of silicone denatured acryl copolymers by silicone is not limited. However, natural acryl copolymers does not have the objective effect. Considering the failure of obtaining the objective effect, the remarkably low coefficient of friction of the constituent of rubbers in the present invention suggests that silicon in the siloxane bond forming silicone, which is a component of the denaturation, works as a bearing.

1 ∼ 10 kg of silicone denatured acryl copolymers can generally be added in 100 kg of the component rubber, though the additive quantity is dependent on the kind of component rubbers. The preferable ratio is 2 ∼ 5 PHR. While less than 1 PHR of the addition is less effective, more than 10 PHR decreases the processing property and the physical property.

Silicone denatured acryl copolymers are granule and the coefficient of the friction is quite low. Therefore, in the case of the component rubber, the uniform dispersion of the component rubber is quite difficult alone, practically impossible. The present invention solved the problem by the addition of polymers containing tetrafluor-ethylene(PTFE) to silicone denatured acryl copolymers. In other words, the addition of polymers containing tetrafluorethylene(PTFE) to component rubbers increases the green-strength and the shearing resistant force of the rubber. As a result, silicone denatured acryl copolymers can be uniformly dispersed. Polymers containing tetrafluoroethylene(PTFE) is soil and its coefficient of friction is one of the lowest of known materials. Therefore, PTFE is the dispersion medium and the decreasing agent of the coefficient of friction for silicone denatured acryl copolymers.

0.5 ∼ 3 PHR of polymers containing tetrafluoroethylene(PTFE) can generally be added in 100 kg of a component rubber, though the additive quantity is dependent on the kind of component rubbers. The best ratio is 1 ∼ 2 PHR. While less than 0.5 PHR of the addition is little effective, more than 3 PHR decreases the processing property and the physical property.

An example of silicone denatured acryl copolymers is Chaline (the name of merchandise) of Nisshin Chemical Industry Co. Ltd. and an example of polymers containing tetrafluoroethylene(PTFE) is Teflon (the name of merchandise) of Du Pont Co. Ltd..

### (II) Production method of the constituent of rubber

The constituent of rubber in the present invention can be obtained by the addition of silicone denatured acryl copolymers and polymers containing tetra fluoro ethylene to the component rubber, which disperses the silicone denatured acryl copolymers uniformly in the component rubber, and by the addition of sulfur to said mixture, according to the conventional method. At that time, the constituent of rubber in the present invention is formed to the objective shape.

In other words, the constituent of rubber in the present invention can be produced by the addition of an appropriate quantity of silicone denatured acryl copolymers and polymers containing tetrafluorethylene(PTFE) to the component rubber, following mixing by an open roll or an internal mixer etc., and by the vulcanization formation using means of a compression, a transfer and an injection after the addition of sulfur or peroxide.

### EMBODIMENTS

The following shows the embodiments and the controls for the present invention. They are just examples, therefore, they do not limit the scope of the invention. EXPERIMENTS (No. 1 ∼ 3), CONTROLS (No. 4 ∼ 8)

Based on the quantity of mixture shown in Table 1, the constituent of the rubber in the present invention for a wiper blade was formed by the addition of silicone denatured acryl copolymers and polymers containing tetrafluorethylene(PTFE) to the component rubber, and by the addition of sulfur or peroxide (experiments No. 1 ∼ 3) at last.

As the controls, based on the quantity of mixture shown in Table 1, the rubber for a wiper blade was formed, in which sulfur or peroxide were added to the component rubber, but in which neither silicone denatured acryl copolymers nor polymers containing tetrafluoroethylene(PTFE) was added (controls No. 4 ∼ 6). As another controls, based on the quantity of mixture shown in Table 1, the rubber for a wiper blade was formed, in which either silicone denatured acryl copolymers or polymers containing tetrafluorethylene(PTFE) was added to the component rubber, and in which peroxide was added ( controls No. 7 ∼ 8). A rubber to which no polymers containing tetrafluoro- ethylene(PTFE) was added could not be processed.

In these embodiments, silicone denatured acryl copolymers used was Chaline (the name of merchandise) of Nisshin Chemical Industry Co. Ltd. and polymers containing tetrafluorethylene (PTFE) used was Teflon (the name of merchandise) of Du Pont Co. Ltd..

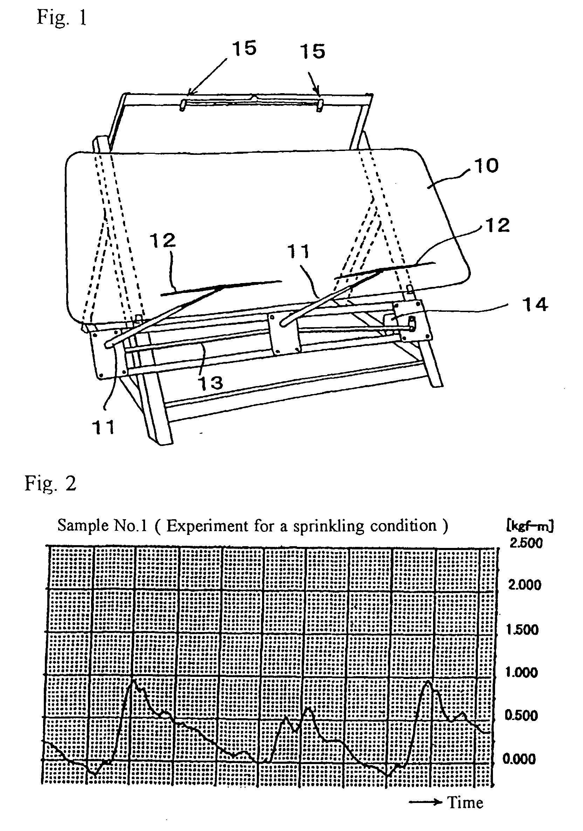

The measuring meter of the coefficient of friction was shown in Fig. 1. As shown in the figure, a wiper blade 12 supported by a wiper arm 11 was settled on the surface of window shield glass 10. The wiper blade was joined to a motor 14 and torque meter by way of link 13. The motor 14 was joined to a recorder (no figure) and a switch (no figure). On the other hand, a sprinkler nozzle 15 was settled at the upper side of the glass surface and was joined to a water tank (no figure).

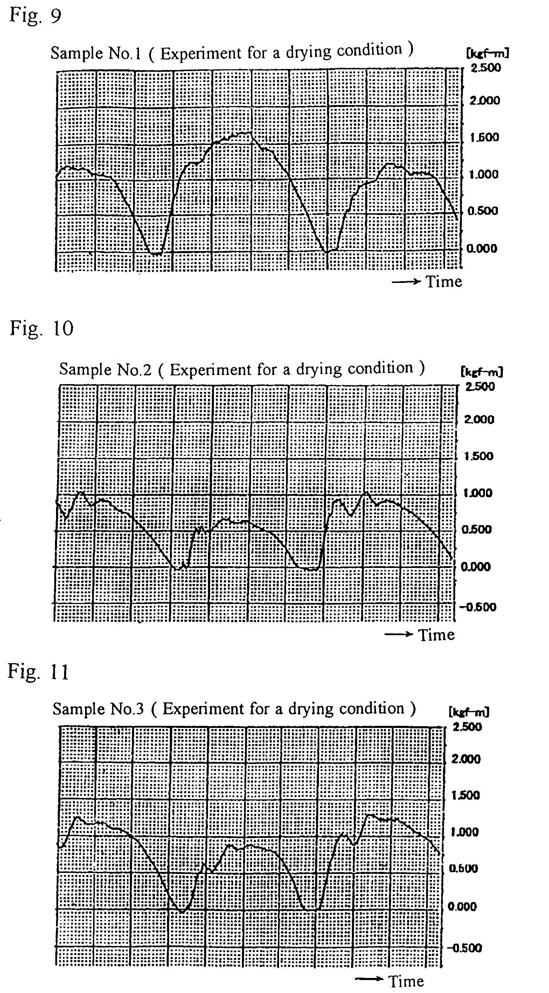

The blade 12 was moved reciprocally on the window surface by the motor 14. The coefficient of friction between the blade 12 and the window surface was measured by the torque meter and the measured value was sent to the recorder. The measurement was carried out for a sprinkling condition (the quantity of sprinkling; one side 50 cc/min., both sides 100 cc/min.) and dry condition (the quantity of sprinkling; zero). The results of the sprinkling condition are shown in Figs. 2 ∼ 8, and those of the dry condition are shown in Figs. 9 ∼ 15.

### Results of sprinkling condition

The constituent of rubber in the present invention ( sample No. 1 ∼ 3) shows the 30 ∼ 40% lower peaks than those of the rubber in which neither silicone denatured acryl copolymers nor polymers containing tetrafluorethylene(PTFE) was added. In other words, the constituent of rubber in the present invention has 40 ∼ 30% lower friction drag than that of a conventional rubber.

The constituent of rubber in the present invention ( sample No. 1 ∼ 3) shows the 30 ∼ 40% lower peaks than those of the rubber (No. 4 ∼ 6). It suggests that the vibration noise is quite low or nothing. On the other hand, in the case of controls (No. 4 ∼ 6), the peaks are sharp. This suggests that the vibration noise are large or the blade jumps.

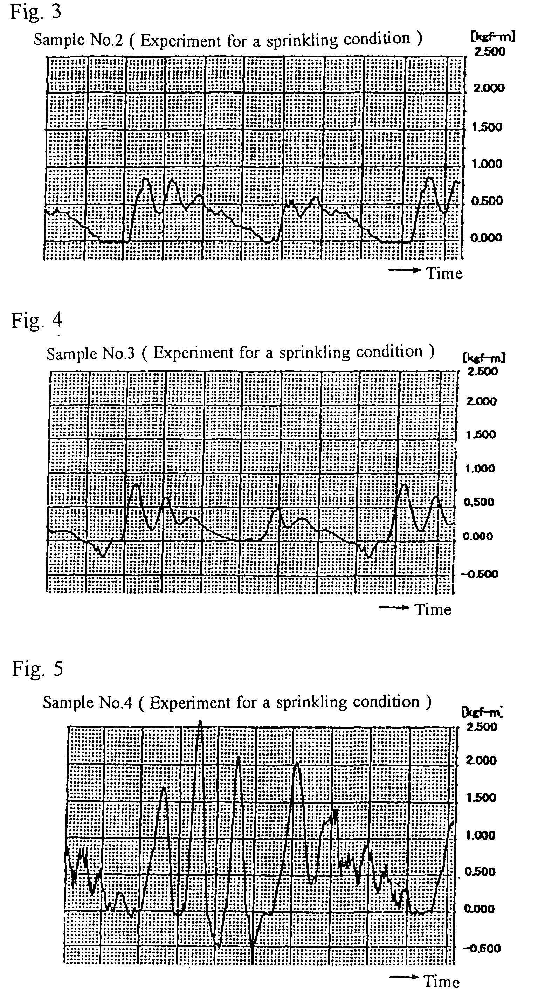

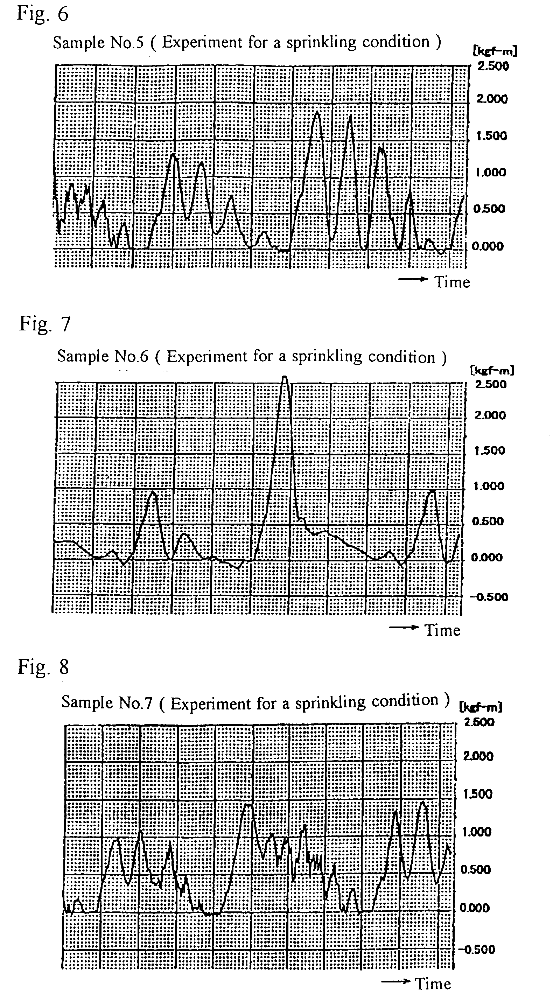

Fig. 8, which shows the result of control (No. 7) that polymers containing tetrafluorethylene(Teflon) was added alone, shows peaks between those of Fig. 2 and Fig. 5. Experiment No. 1(Fig. 2), control No. 4 (Fig. 5 ) and control No. 7 (Fig. 8) all contain silicone rubber, but are different from each other in that it contains alternatively either silicone denatured acryl copolymers or polymers containing tetrafluorethylene(PTFE).
From the comparison of these data, the addition of both silicone denatured acryl copolymers and polymers containing tetrafluorethylene increase the effect.

### Results of dry condition

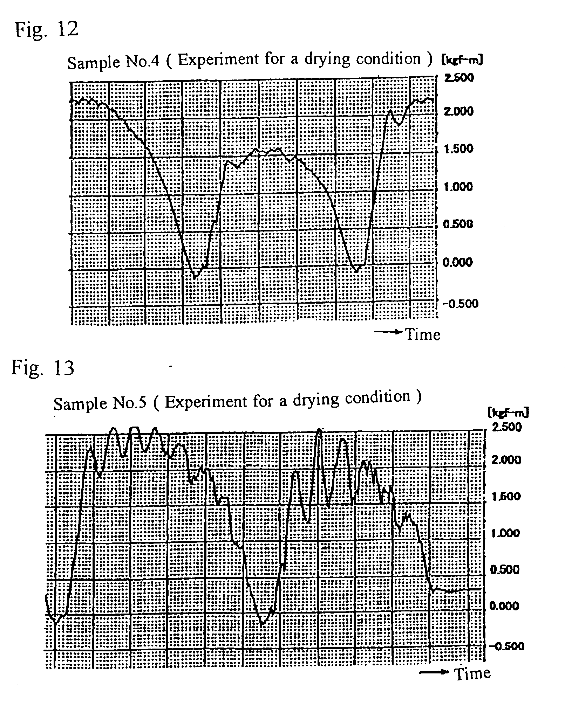

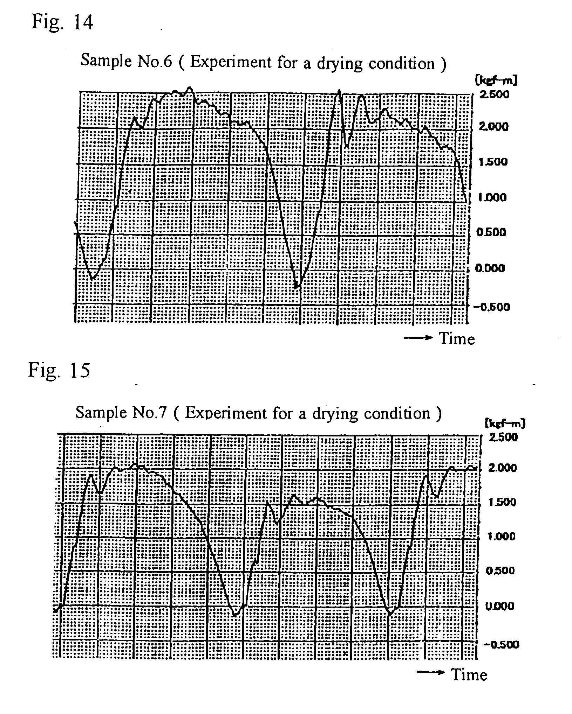

The constituents of rubbers shown in Fig. 9 ∼ Fig. 11 show 50 ∼ 30% lower torque and 50 ∼ 30% lower frictional drag, even in a dry condition, than those of controls (No. 4 ∼ 6 ) which neither silicone denatured acryl copolymers nor polymers containing tetrafluorethylene(PTFE) was added as shown in Fig. 12 ∼ Fig.14. Besides, the constituent of rubber in the present invention has small peaks of the coefficient of friction. On the other hand, the coefficient of friction of control No. 4 ∼ 6 which does not contain said components has large peaks. These results suggest that the constituent of the rubber in the present invention is effective to the vibration noise, even in a dry condition.

The results of control No. 7, which only contains polymers containing tetrafluorethylene(Teflon), shows the peaks between those of Fig. 9 and Fig. 12, as shown in Fig.15. As described before, these contain silicone rubber as the component rubber, and are differentiated by whether they contain silicone denatured acryl copolymers and polymers containing tetrafluorethylene(PTFE). Therefore, from comparison with these results, the embodiments in the present invention, which contains silicone denatured acryl copolymers and polymers containing tetrafluorethylene(PTFE), have the great effects, even in a dry condition.

As a conclusion, the constituent of the rubber in the present invention, which contains silicone denatured acryl copolymers and polymers containing tetrafluorethylene(PTFE), has the great effects, even in a sprinkling condition and in a dry condition. The test using a practical machine for experiments No. 1 ∼ 2 obtained no noise caused by creaking and vibration and this condition was kept for a long time.

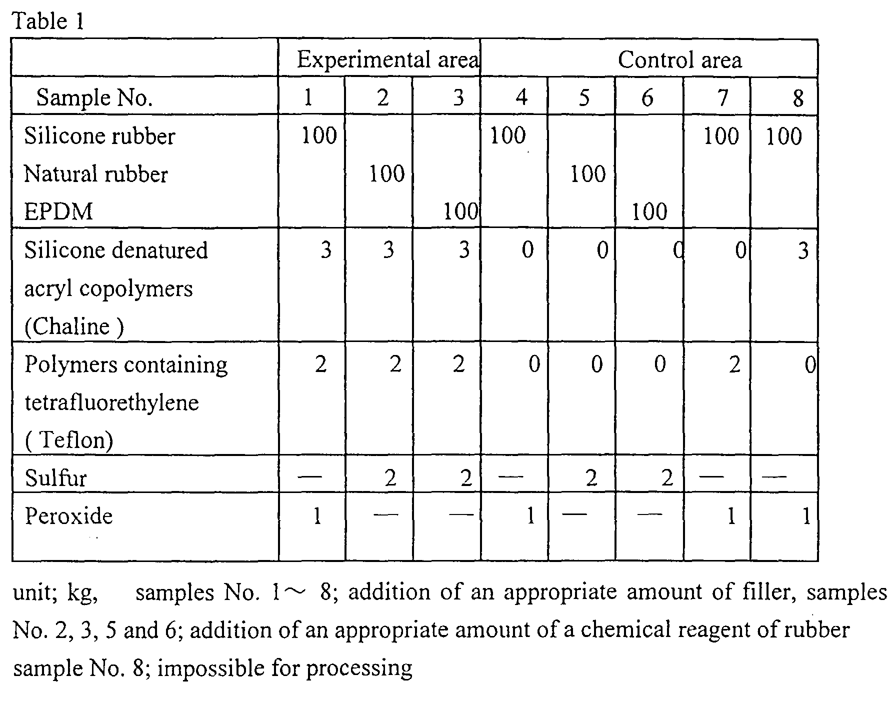

### Effect of the Invention

Dispersing silicone denatured acryl copolymers into a component rubber uniformly by utilizing the unique property of polymers containing tetrafluoroethylene ( PTFE ), the constituent of the rubber in the present invention remarkably decreases the coefficient of friction without any noise caused by creaking and vibration when it is utilized for a wiper blade etc..

Besides, the present invention is related to the improvement of the constituent of rubber itself. Therefore, it does not need a surface treatment, so that it does not trigger off the cost up. Furthermore, the whole body of the present invention has uniform effects and the effects is kept for a long time. In addition, since the present invention is related to the improvement of the constituent of rubber itself, the invention is not limited by the utilization of the constituent of rubber or the shape. In other words, any shape can be formed. Therefore, it can be applied to various kinds of rubber elements, bearing elements, a packing material, an oil seal, a butterfly type valve and a sluice valve. Besides, it is quite appropriate for materials for sport goods on snow or water, because of low coefficient of friction and sliding well.

### Description of Numeral

- 10: windshield glass
- 11: wiper arm
- 12: wiperblade
- 13: wiper link
- 14: motor
- 15: sprinkler nozzle

## Claims

1. the constituents of a low frictional rubber characterized by that silicone denatured acryl copolymers and polymers containing tetrafluorethylene (PTFE) are mixed with natural rubber, synthetic rubber or their mixture( component rubber).

2. the constituents of a low frictional rubber described in claim 1 and characterized by that 1 ∼ 10 kg (PHR) of silicone denatured acryl copolymers is mixed in 100 kg of the component rubber.

3. the constituents of a low frictional rubber described in claim 1 or 2 and characterized by that 0.5 ∼ 3 kg (PHR) of polymers containing tetrafluorethylene (PTFE) is mixed in the component rubber.

4. the production method of the constituents of a low frictional rubber characterized by that silicone denatured acryl copolymers and polymers containing tetrafluorethylene are mixed with the component rubber to result in uniformly dispersing silicone denatured acryl copolymers and that sulfur is added in said mixture at last.
